Europäisches Patentamt

European Patent Office

Office européen des brevets

(11) Numéro de publication: **0 231 047 B1**

# FASCICULE DE BREVET EUROPEEN

(45) Date de publication de fascicule du brevet:
**25.09.91**

(51) Int. Cl.⁵: **F24F 3/14**, B01D 53/26

(21) Numéro de dépôt: **87200080.7**

(22) Date de dépôt: **20.01.87**

(54) **Appareil pour la dessication d'air humide.**

(30) Priorité: **30.01.86 BE 216205**

(43) Date de publication de la demande:
**05.08.87 Bulletin 87/32**

(45) Mention de la délivrance du brevet:
**25.09.91 Bulletin 91/39**

(84) Etats contractants désignés:
**AT BE CH DE ES FR GB IT LI LU NL SE**

(56) Documents cités:
**FR-A- 2 297 664**
**US-A- 2 363 262**
**US-A- 3 221 478**
**US-A- 4 064 876**

(73) Titulaire: **SOLVAY & Cie (Société Anonyme)**
**Rue du Prince Albert, 33**
**B-1050 Bruxelles(BE)**

(72) Inventeur: **Francois, Alfred**
**Rue de Heembeek, 226**
**B-1120 Bruxelles(BE)**

(74) Mandataire: **Anthoine, Paul**
**SOLVAY & Cie Département de la Propriété**
**Industrielle 310, rue de Ransbeek**
**B-1120 Bruxelles(BE)**

## Description

L'invention concerne un appareil pour la dessication de l'air.

On connaît des appareils pour la dessication de l'air des locaux, dans lesquels l'air est amené à circuler dans une enceinte, au contact d'une charge de chlorure de calcium à l'état de particules (FR-A-2 297 664 - SOLVAY & Cie). Dans ces appareils connus, l'air humide traité abandonne son humidité à la charge de chlorure de calcium, ce qui donne lieu à la formation progressive d'une solution aqueuse de chlorure de calcium que l'on évacue.

Pour améliorer le rendement de ces appareils, on a songé à mettre l'air humide en contact avec la solution aqueuse de chlorure de calcium, avant de l'envoyer sur la charge de chlorure de calcium solide. Des appareils conçus à cette fin comprennent une colonne verticale du type des scrubbers, contenant un empilage d'anneaux Raschig sous la charge de chlorure de calcium. L'air à traiter est introduit à la base de la colonne, traverse l'empilage, à contre-courant de la solution de chlorure de calcium, puis circule au contact de la charge de chlorure de calcium (Chimie et Industrie, vol. 38, n° 1, juillet 1937 - SOLVAY & Cie "Le séchage des gaz par le chlorure de calcium", page 4).

Dans le document US-A-2 363 262, on décrit un appareil pour la dessication d'air humide, comprenant des poches à paroi ajourée contenant un agent dessicatif, une structure stratifiée de claies métalliques sous les poches, une ouverture d'admission d'air sous les claies métalliques et une ouverture d'évacuation d'air au-dessus des poches. Pendant le fonctionnement de l'appareil, l'air humide à déshydrater circule de bas en haut et passe successivement à travers la structure stratifiée de claies, et au contact de l'agent dessicatif.

L'invention a pour objectif d'améliorer davantage l'efficacité et le rendement des appareils pour la dessication de l'air.

L'invention concerne dès lors un appareil pour la dessication d'air humide, comprenant, dans une enceinte, un réceptacle pour un agent dessicatif solide, une matière de garnissage de structure stratifiée perméable à l'air et aux liquides, disposée sous le réceptacle, au moins une ouverture pour l'admission de l'air dans l'enceinte, sous la matière de garnissage et au moins une ouverture pour l'évacuation de l'air hors de l'enceinte, au-dessus du réceptacle ; selon l'invention, la structure stratifiée de la matière de garnissage est formée de plusieurs matelas individuels, horizontaux, superposés, en un matériau filtrant comprenant de la bourre de fibres enchevêtrées.

Dans l'appareil selon l'invention, le réceptacle doit être conçu pour permettre une circulation de l'air à déshydrater, au contact de l'agent dessicatif. L'agent dessicatif doit être choisi parmi ceux qui sont susceptibles de former des solutions aqueuses avec l'humidité de l'air. Des agents dessicatifs spécialement adéquats sont les chlorures des métaux alcalins et alcalinoterreux et les hydroxydes des métaux alcalins. Le chlorure de calcium et l'hydroxyde de sodium sont préférés.

Le profil de l'enceinte n'est pas critique. Celle-ci peut par exemple être formée d'un tube cylindrique vertical qui contient le réceptacle avec l'agent dessicatif dans sa partie supérieure et la matière de garnissage dans sa partie inférieure.

L'ouverture pour l'admission de l'air dans l'enceinte doit être ménagée au-dessous de la matière de garnissage et l'ouverture pour l'évacuation de l'air doit être ménagée dans la partie supérieure de l'enceinte, de manière que l'air circule de bas en haut dans l'enceinte, d'abord verticalement à travers la matière de garnissage, puis au contact de l'agent dessicatif.

L'appareil est habituellement muni d'un ventilateur pour assurer une circulation ascendante forcée de l'air dans l'enceinte.

Selon l'invention, la matière de garnissage est formée de plusieurs matelas individuels en un matériau filtrant, les matelas étant superposés horizontalement, de manière à former une structure stratifiée.

Le nombre optimum de matelas dépend de divers paramètres, notamment des dimensions de l'appareil, de la nature de l'agent dessicatif, du matériau filtrant et de la perméabilité des matelas. Il doit être recherché dans chaque cas particulier.

Le matériau filtrant doit être inerte chimiquement vis-à-vis des solutions aqueuses de l'agent dessicatif. Selon l'invention, il comprend de la bourre ou de l'ouate de fibres enchevêtrées. Les fibres peuvent être en un matériau inorganique, par exemple de l'amiante ou du verre, ou en un matériau organique polymérique tel que, par exemple, des polymères thermoplastiques choisis parmi les polyoléfines, les polyesters, les polyamides et leurs dérivés. Le polyéthylène et le polypropylène sont spécialement recommandés.

Il est préférable, suivant l'invention, d'utiliser des fibres dont le diamètre est sensiblement compris entre 0,1 et 25 microns; des fibres qui conviennent bien sont celles ayant un diamètre compris entre 1 et 15 microns.

Dans une variante de l'appareil selon l'invention, la structure stratifiée comprend une alternance de matelas de bourre lâche et de matelas de bourre tassée. Dans cette variante de l'invention, l'épaisseur des matelas de bourre tassée et l'épaisseur des matelas de bourre lâche sont avantageusement dans un rapport compris entre 1:50 et 1:2, de préférence entre 1:20 et 1:10, à même volume réel de matière fibreuse par unité d'aire des matelas.

Dans l'appareil selon l'invention, la structure stratifiée repose généralement sur une grille horizontale qui forme le fond de l'enceinte et délimite les ouvertures d'admission de l'air humide.

Le réceptacle contenant l'agent dessicatif peut par exemple comprendre une grille horizontale ou inclinée, sur laquelle l'agent dessicatif est réparti à l'état d'un lit de blocs ou de granules, comme schématisé dans le brevet belge 825 611 précité, de manière à être traversé par l'air.

On préfère toutefois, dans une forme de réalisation particulière de l'appareil selon l'invention, disposer l'agent dessicatif dans une série de poches individuelles à paroi ajourée, entre lesquelles circule l'air à déshydrater. Dans cette forme de réalisation de l'invention, on utilise avantageusement des poches de forme oblongue, suspendues verticalement sous un couvercle d'obturation de l'enceinte, à travers lequel est ménagée l'ouverture d'évacuation de l'air traité.

Dans une forme de réalisation avantageuse de l'appareil selon l'invention, un agent tensioactif est mélangé à l'agent dessicatif. L'agent tensioactif est sélectionné parmi ceux qui sont capables de réduire la tension superficielle des solutions aqueuses de l'agent dessicatif au contact de la structure stratifiée filtrante. Toutes autres choses égales, l'appareil conforme à cette forme de réalisation de l'invention présente une efficacité et un rendement optimum.

L'appareil selon l'invention convient pour la dessication de l'air humide de tous locaux. Il est spécialement adapté aux locaux de grandes dimensions, notamment aux ateliers industriels nécessitant un faible degré hygrométrique de l'air ambiant (ateliers d'anodisation et de peinture, imprimeries, boulangeries, etc.) et aux salles de délassement telles que des piscines, des salles de sports, des salons de danse.

Des particularités et des détails de l'invention vont ressortir de la description des dessins annexés, qui représentent une forme de réalisation particulière de l'appareil selon l'invention.

La figure 1 montre en section axiale verticale, une forme de réalisation particulière de l'appareil selon l'invention.

La figure 2 est une section horizontale selon le plan II-II de la figure 1.

La figure 3 montre, à grande échelle, en section axiale verticale, un détail de l'appareil de la figure 1.

La figure 4 montre, à grande échelle, en section axiale verticale, un détail désigné IV à la figure 1.

Dans ces figures, des mêmes notations de référence désignent des éléments identiques.

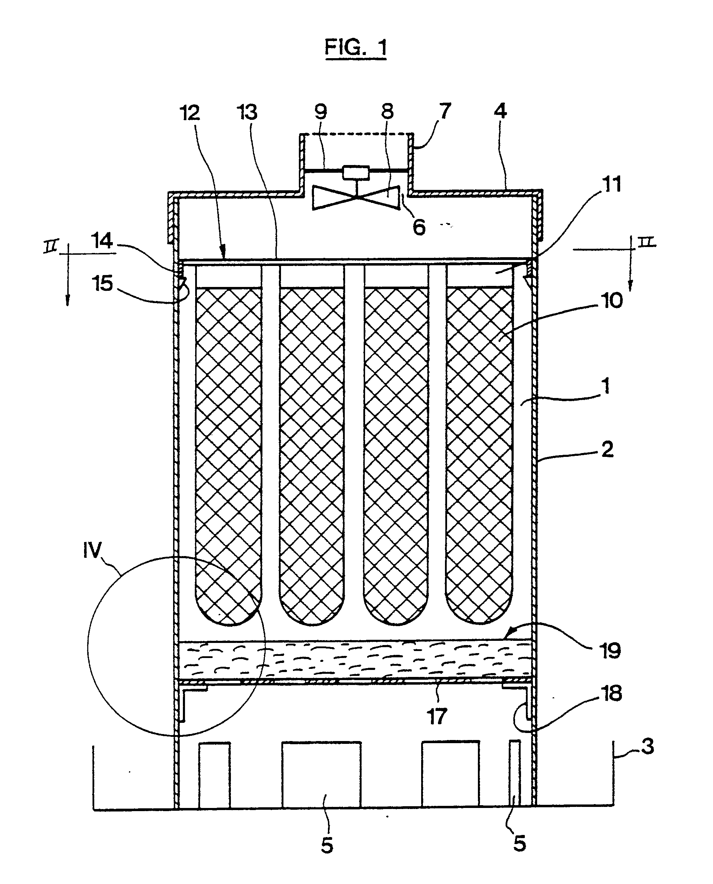

L'appareil conforme à l'invention, schématisé à la figure 1, comprend une enceinte 1 délimitée par une paroi tubulaire verticale 2 posée dans une cuvette 3 et obturée par un couvercle amovible 4.

L'enceinte 1 communique avec l'ambiance par l'intermédiaire d'ouvertures 5 ménagées dans la partie inférieure de la paroi tubulaire 2 et une ouverture centrale 6 du couvercle, surmontée d'une cheminée cylindrique 7. Un ventilateur 8, fixé à la cheminée 7 par l'intermédiaire d'entretoises 9, assure une circulation ascendante de l'air dans l'enceinte 1.

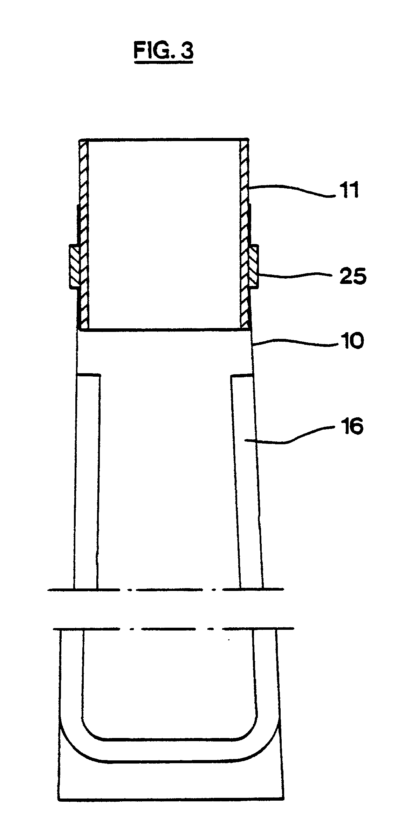

Une série de poches verticales oblongues 10, à paroi ajourée en résille, contiennent du chlorure de calcium à l'état de paillettes. Les poches 10 sont suspendues à des manchons cylindriques rigides 11 d'une ossature rigide 12, au moyen de colliers de serrage 25 (figure 3).

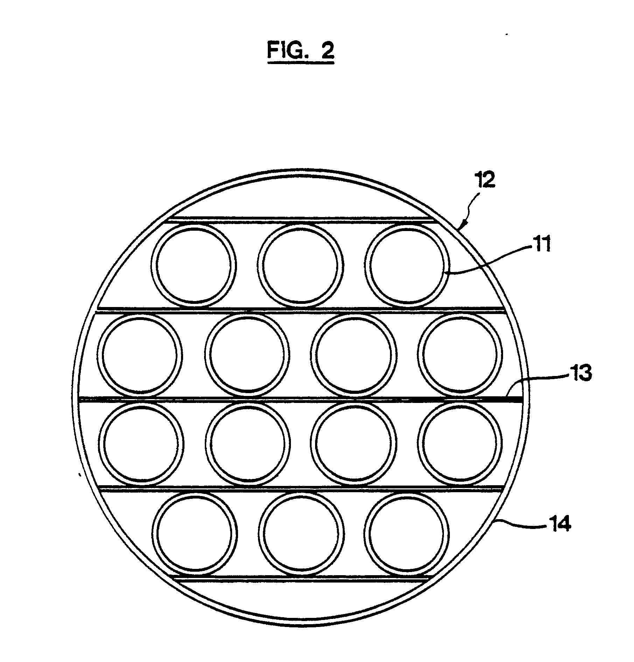

L'ossature 12 est formée (figure 2) d'un assemblage de tiges horizontales 13 supportant les manchons cylindriques 11 et solidarisées à une bague périphérique horizontale 14. Celle-ci est posée librement sur des supports 15 solidaires de la paroi tubulaire 2.

Les poches 10 contiennent avantageusement un raidisseur interne, formé d'un tube coudé 16, dont la fonction est de rigidifier les poches dans leur forme oblongue.

Dans sa partie inférieure, sous les poches 10, l'enceinte 1 contient une grille horizontale 17 posée sur des supports 18 solidaires de la paroi tubulaire 2. La grille 17 supporte une matière de garnissage 19.

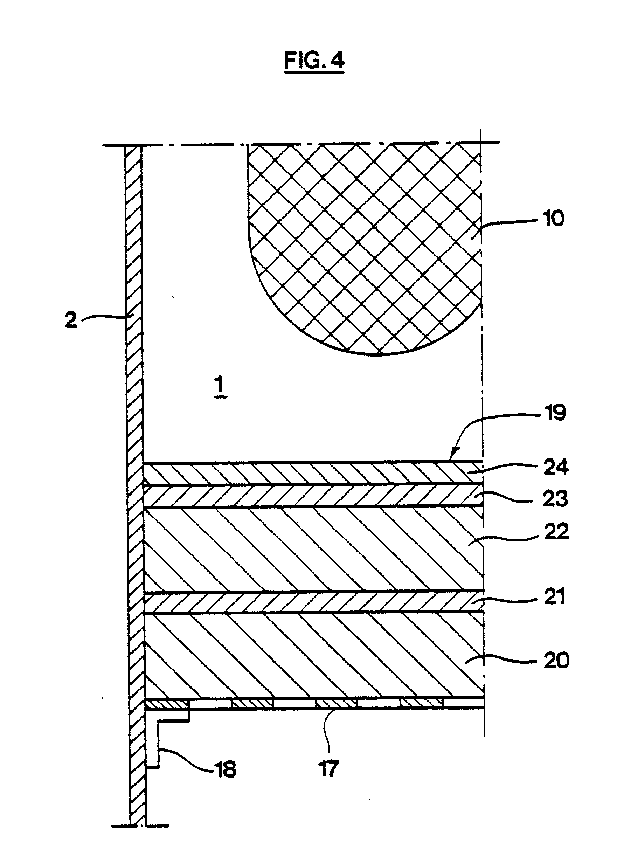

La matière de garnissage 19 est représentée à grande échelle à la figure 4. Conformément à l'invention, elle présente une structure stratifiée, formée d'une superposition de cinq matelas individuels de fibres, désignés par les notations 20, 21, 22, 23, 24. Les matelas sont formés chacuns d'une bourre ou ouate de fibres enchevêtrées en polyéthylène. Tous les matelas contiennent une masse approximativement égale de fibres, mais dans les matelas 21, 23, 24, la bourre est à l'état comprimé, tandis qu'elle est à l'état lâche dans les matelas 20 et 22. La compression de la bourre dans les matelas 21, 23, 24 est réglée de manière que l'épaisseur de chacun de ces matelas soit approximativement égale au quart de l'épaisseur des matelas de bourre lâche 20, 22.

Pour assurer le fonctionnement de l'appareil représenté aux figures, le ventilateur 8 est mis en route, les poches 10 étant remplies de chlorure de calcium à l'état de paillettes ou d'un autre agent dessicatif à l'état de particules. L'air ambiant pénètre dans l'enceinte 1 via les ouvertures 5, traverse verticalement les matelas 20, 21, 22, 23, 24 puis circule le long des poches 10 où il abandonne une partie au moins de son humidité au chlorure de calcium. L'air déshydraté quitte l'enceinte 1 par l'ouverture 6 et la cheminée 7, tandis que la solution de chlorure de calcium formée percole à travers les matelas et est recueillie dans la cuvette 3. Pendant son passage dans les matelas 20, 21, 22, 23, 24, l'air humide circule à contre-courant de la solution de chlorure de calcium et lui abandonne une partie de son humidité.

Pour favoriser le transfert de l'humidité de l'air dans la solution de chlorure de calcium, on mélange un agent tensioactif aux paillettes de chlorure de calcium contenues dans les poches 10. L'agent tensioactif a pour fonction de diminuer la tension superficielle de la solution de chlorure de calcium au contact des fibres de la matière de garnissage 19.

## Revendications

1. Appareil pour la dessication d'air humide, comprenant, dans une enceinte (1), un réceptacle (10) pour un agent dessicatif solide, une matière de garnissage de structure stratifiée (19) perméable à l'air et aux liquides, disposée sous le réceptacle (10), au moins une ouverture (5) pour l'admission de l'air dans l'enceinte (1), sous la matière de garnissage (19) et au moins une ouverture (6) pour l'évacuation de l'air hors de l'enceinte, au-dessus du réceptacle (10), caractérisé en ce que la structure stratifiée de la matière de garnissage (19) est formée de plusieurs matelas individuels, horizontaux, superposés, en un matériau filtrant (20, 21, 22, 23, 24) comprenant de la bourre de fibres enchevêtrées.

2. Appareil selon la revendication 1, caractérisé en ce que la structure stratifiée (19) comprend une alternance de matelas de bourre lâche (20, 22) et de matelas de bourre tassée (21, 23).

3. Appareil selon la revendication 2, caractérisé en ce que l'épaisseur des matelas de bourre tassée (21, 23) et l'épaisseur des matelas de bourre lâche (20, 22) sont dans un rapport compris entre 1:20 et 1:10.

4. Appareil selon l'une quelconque des revendications 1 à 3, caractérisé en ce que la structure stratifiée (19) est posée sur une grille (17) formant le fond de l'enceinte (1) et délimitant les ouvertures précitées pour l'admission de l'air.

5. Appareil selon la revendication 4, caractérisé en ce que la structure stratifiée (19) repose sur la grille (17) par l'intermédiaire d'un matelas de bourre lâche (20).

6. Appareil selon l'une quelconque des revendications 1 à 5, caractérisé en ce que les fibres sont en polyéthylène.

7. Appareil selon l'une quelconque des revendications 1 à 6, caractérisé en ce qu'il comprend un ventilateur conçu pour engendrer une circulation ascensionnelle de l'air, successivement à travers la structure stratifiée et au contact de l'agent dessicatif.

8. Appareil selon l'une quelconque des revendications 1 à 7, caractérisé en ce que l'agent dessicatif est du chlorure de calcium à l'état de particules et contient un tensioactif.

9. Appareil selon l'une quelconque des revendications 1 à 8, caractérisé en ce que le réceptacle (10) de l'agent dessicatif comprend une série de poches verticales à paroi ajourée.

10. Appareil selon la revendication 9, caractérisé en ce que les poches (10) contiennent une armature interne de raidissement (16).

## Claims

1. Device for drying moist air, comprising, in an enclosure (1), a receptacle (10) for a solid desiccant, an air- and liquid-permeable packing material (19) with a layered structure arranged under the receptacle (10), at least one opening (5) for the admission of air into the enclosure (1), under the packing material (19), and at least one opening (6) for the removal of air from the enclosure (6), above the receptacle (10) characterised in that the layered structure of the packing material (19) consists of several individual, horizontal, superposed mats made of a filter medium (20, 21, 22, 23, 24) comprising entangled fibre flock.

2. Device according to Claim 1, characterised in that the layered structure (19) comprises an alternation of mats of loose flock (20, 22) and mats of pressed flock (21, 23).

3. Device according to Claim 2, characterised in that the thickness of the mats of pressed flock (21, 23) and the thickness of the mats of loose flock (20, 22) are in a ratio of between 1:20 and 1:10.

4. Device according to any one of Claims 1 to 3, characterised in that the layered structure (19) rests on a grid (17) forming the bottom of the enclosure (1) and defining the abovementioned openings for the admission of air.

5. Device according to Claim 4, characterised in that the layered structure (19) rests on the grid (17) by means of a mat of loose flock (20).

6. Device according to any one of Claims 1 to 5, characterised in that the fibres are made of polyethylene.

7. Device according to any one of Claims 1 to 6, characterised in that it comprises a fan designed to generate an upward flow of air, successively through the layered structure and in contact with the desiccant.

8. Device according to any one of Claims 1 to 7, characterised in that the desiccant is calcium chloride in particulate form and contains a surfactant.

9. Device according to any one of Claims 1 to 8, characterised in that the receptacle (10) for the desiccant comprises a series of vertical pockets with a perforated wall.

10. Device according to Claim 9, characterised in that the pockets (10) contain an internal stiffening bracing (16).

**Patentansprüche**

1. Vorrichtung zum Trocknen von feuchter Luft, die in einem Gehäuse (1) einen Auffangbehälter (10) für ein festes Trocknungsmittel, ein Auskleidungsmaterial mit SchichtStruktur (19), das für Luft und Flüssigkeiten durchlässig ist und unterhalb des Auffangbehälters (10) angeordnet ist, wenigstens eine Öffnung (5) zum Einströmen der Luft in das Gehäuse (1) unterhalb des Auskleidungsmaterials (19) und wenigstens eine Öffnung (6) zum Austritt der Luft aus dem Gehäuse oberhalb des Auffangbehälters (10) umfaßt, dadurch gekennzeichnet, daß die Schicht-Struktur des Auskleidungsmaterials (19) aus mehreren einzelnen, horizontalen, übereinander angeordneten Lagen aus einem Filtermaterial (20, 21, 22, 23, 24), das Flocken aus ineinander verwickelten Fasern umfaßt, gebildet ist.

2. Vorrichtung nach Anspruch 1, dadurch gekennzeichnet, daß die Schicht-Struktur (19) abwechselnd Lagen aus losen Flocken (20, 22) und Lagen aus zusammengepreßten Flocken (21, 23) umfaßt.

3. Vorrichtung nach Anspruch 2, dadurch gekennzeichnet, daß die Dicke der Lagen aus zusammengepreßten Flocken (21, 23) und die Dicke der Lagen aus losen Flocken (20, 22) im Verhältnis zwischen 1:20 und 1:10 ist.

4. Vorrichtung nach einem der Ansprüche 1 bis 3, dadurch gekennzeichnet, daß die Schicht-Struktur (19) auf einem Gitter (17) liegt, das den Boden des Gehäuses (1) bildet und die obengenannten Öffnungen zum Einströmen der Luft begrenzt.

5. Vorrichtung nach Anspruch 4, dadurch gekennzeichnet, daß die Schicht-Struktur (19) auf dem Gitter (17), mit einer Lage aus losen Flocken (20) dazwischen, liegt.

6. Vorrichtung nach einem der Ansprüche 1 bis 5, dadurch gekennzeichnet, daß die Fasern aus Polyethylen sind.

7. Vorrichtung nach einem der Ansprüche 1 bis 6, dadurch gekennzeichnet, daß sie einen Ventilator umfaßt, der so geschaffen ist, daß er eine nach oben gerichtete Luftzirkulation nacheinander durch die Schicht-Struktur und in Kontakt mit dem Trocknungsmittel erzeugt.

8. Vorrichtung nach einem der Ansprüche 1 bis 7, dadurch gekennzeichnet, daß das Trocknungsmittel Kalziumchlorid in teilchenförmigem Zustand ist und ein Tensid enthält.

9. Vorrichtung nach einem der Ansprüche 1 bis 8, dadurch gekennzeichnet, daß der Auffangbehälter (10) des Trocknungsmittels eine Reihe von vertikalen Taschen mit durchbrochenen Seitenwänden umfaßt.

10. Vorrichtung nach Anspruch 9, dadurch gekennzeichnet, daß die Taschen (10) eine innere Versteifungsarmierung (16) enthalten.

## FIG. 1

FIG. 2

## FIG. 3

## FIG. 4